# EUROPÄISCHE PATENTANMELDUNG

(11) **EP 1 454 826 A1**
(43) Veröffentlichungstag der Anmeldung: **08.09.2004**
(21) Anmeldenummer: 04003366.4
(22) Anmeldetag: 16.02.2004
(51) Int. Cl.: B63G 8/00

(54) **Unterseeboot mit Brennstoffzelle Module**

(30) Priorität: 07.03.2003 DE 10309978
(71) Anmelder: HOWALDTSWERKE-DEUTSCHE WERFT AG, 24143 Kiel (DE)
(72) Erfinder: Sattler, Gunter, Dipl.-Ing., 23568 Lübeck (DE); Benthien, Udo, Dipl.-Ing., 23562 Lübeck (DE); Pommer, Hans, Dipl.-Ing., 24360 Barkelsby (DE)
(74) Vertreter: Vollmann, Heiko, Dipl.-Ing.

(57) **Zusammenfassung**

Die Erfindung betrifft ein Unterseeboot mit zumindest einer Brennstoffzelle (2) und zumindest einem Metallhydridwasserstoffspeicher (4). Die von der Brennstoffzelle als Abwärme abgegebene Wärmeenergie wird zum Lösen von Wasserstoff aus dem Metallhydridwasserstoffspeicher (4) verwendet

## Beschreibung

Die Erfindung betrifft ein Unterseeboot mit zumindest einer Brennstoffzelle und zumindest einem Metallhydridwasserstoffspeicher.

Es sind Unterseeboote bekannt, welche mit Brennstoffzellen zur Versorgung mit elektrischer Energie ausgerüstet sind. Die Brennstoffzellen werden mit Wasserstoff betrieben, welcher in Metallhydridwasserstoffspeichern gespeichert ist. Um den in den Metallhydridwasserstoffspeichern gebundenen Wasserstoff zu lösen, ist es erforderlich, Energie in den Metallhydridwasserstoffspeicher einzubringen. Hierzu wird üblicherweise Wärmeenergie in den Hydridspeicher eingebracht. Um diese erforderliche Wärmeenergie für das Auslösen des Wasserstoffs bereitzustellen, sind Zusatzaggregate erforderlich. Aufgrund des Eigenbedarfs an Energie dieser Geräte erhöht sich der Gesamtenergiebedarf des Unterseebootes. Darüber hinaus sind diese Geräte potentielle Geräuschquellen.

Es ist daher Aufgabe der Erfindung, ein verbessertes Unterseeboot mit zumindest einer Brennstoffzelle und zumindest einem Metallhydridwasserstoffspeicher zu schaffen, welches ein Antriebssystem mit einem höheren Wirkungsgrad und weniger potentiellen Geräuschquellen aufweist.

Diese Aufgabe wird durch ein Unterseeboot mit dem in Anspruch 1 angegebenen Merkmalen gelöst. Bevorzugte Ausführungsformen ergeben sich aus den Unteransprüchen.

Das erfindungsgemäße Unterseeboot weist zur Energieversorgung zumindest eine Brennstoffzelle und zumindest einen Metallhydridwasserstoffspeicher auf, in welchem der zum Betrieb der Brennstoffzelle erforderliche Wasserstoff gebunden ist. Die Brennstoffzelle gibt neben elektrischer Energie Wärmeenergie in Form von Abwärme ab. Diese Wärmeenergie aus der Abwärme der Brennstoffzelle wird erfindungsgemäß zum Lösen von Wasserstoff aus dem Metallhydridwasserstoffspeicher verwendet. Dies ermöglicht, die sonst über Kühlkreisläufe an das Seewasser abgegebene Abwärme im Antriebssystem des Unterseebootes auszunutzen. Somit wird der Gesamtwirkungsgrad des Antriebssystems erhöht, da weniger oder keine zusätzliche Energie zum Lösen des Wasserstoffes aus dem Hydridspeicher erforderlich ist. Darüber hinaus kann auf zusätzliche Aggregate zum Bereitstellen von Wärmeenergie zum Lösen des Wasserstoffes aus dem Metallhydridwasserstoffspeicher verzichtet werden, wodurch potentielle Geräuschquellen im Antriebs- bzw. Energieversorgungssystem des Unterseebootes entfallen können. Dadurch, dass die Wärmeenergie aus der Abwärme der Brennstoffzelle in den Metallhydridwasserstoffspeicher zum Lösen des Wasserstoffs eingeleitet wird, kann ferner die an das Seewasser abgegebene Abwärme reduziert werden, wodurch sich die IR-Signatur des Unterseebootes verringert. Insgesamt ist das erfindungsgemäße Unterseeboot durch die verringerte IR-Signatur und weniger potentielle Geräuschquellen somit schwerer zu orten.

Besonders bevorzugt wird die gesamte erforderliche Energie zum Lösen des Wasserstoffs aus dem Metallhydridwasserstoffspeicher durch die Wärmeenergie aus der Abwärme der Brennstoffzelle bereitgestellt. Dies ermöglicht, auf zusätzliche Aggregate zur Bereitstellung von Wärmeenergie zum Lösen des Wasserstoffs aus dem Hydridspeicher bzw. den Hydridspeichern vollständig verzichten zu können und damit die Zahl potentieller Geräuschquellen zu verringern. Allein die Abwärme aus der Brennstoffzelle oder mehreren Brennstoffzellen ist ausreichend, den zum Betrieb der Brennstoffzelle erforderlichen Wasserstoff aus dem Hydridspeicher oder mehreren Hydridspeichern zu lösen. Die beim Anfahren des Brennstoffzellensystems erforderliche Energie zum Lösen des Wasserstoffs aus dem Hydridspeicher kann aus der Wärme des Speichers und des umgebenden Meerwassers entnommen werden, so dass auch für diesen Betriebszustand keine zusätzliche Energie zum Lösen des Wasserstoffes benötigt wird. So wird der Wirkungsgrad des gesamten Energieversorgungssystems erhöht und gleichzeitig die an das umgebende Meerwasser abzugebende Abwärme und damit die IR-Signatur des Unterseebootes auf ein Minimum reduziert.

Der Metallhydridwasserstoffspeicher dient vorzugsweise als Wärmespeicher. Das bedeutet, der Metallhydridwasserstoffspeicher speichert einen Teil oder die gesamte als Abwärme von der Brennstoffzelle oder anderen Aggregaten in dem Unterseeboot abgegebene Wärmeenergie. Dabei können insbesondere auch leere bzw. teilentladene Metallhydridwasserstoffspeicher als Wärmespeicher verwendet werden. Dies ermöglicht, auf zusätzliche Wärme- bzw. Wärmezwischenspeicher verzichten zu können. Abwärme, welche sonst an das umgebende Meerwasser abgegeben werden müsste, kann in dem Metallhydridwasserstoffspeicher gespeichert bzw. zwischengespeichert werden, so dass zumindest vorübergehend die Abgabe von Wärmeenergie an das Meerwasser stark verringert bzw. im Wesentlichen unterbunden werden kann, um die IR-Signatur zu verringern und eine Ortung des Unterseebootes aufgrund der abgegebenen Wärme zu erschweren.

Bevorzugt wird die gesamte Wärmeenergie aus der Abwärme der zumindest einen Brennstoffzelle in den zumindest einen oder mehrere Metallhydridwasserstoffspeicher eingebracht. Dies ermöglicht, dass überhaupt keine Anteile der von der Brennstoffzelle oder den mehreren Brennstoffzellen abgegebenen Wärmeenergie in das umgebende Meerwasser abgeführt werden müssen. Auf diese Weise kann die IR-Signatur des Unterseebootes deutlich verringert werden.

Der zumindest eine Metallhydridwasserstoffspeicher ist vorzugsweise an einer Außenseite des Druckkörpers des Unterseebootes angeordnet und zumindest an seiner dem Druckkörper abgewandten Seite nach außen hin mit einer thermischen Isolierung versehen. Diese thermische Isolierung verbessert den Wirkungsgrad des gesamten Energieversorgungssystems bestehend aus Brennstoffzelle und Metallhydridwasserstoffspeicher weiter, da Wärmeverluste in dem Metallhydridwasserstoffspeicher verringert werden. Die thermische Isolierung ist insbesondere an der Außenseite, d. h. der dem Seewasser zugewandten Seite des Metallhydridwasserstoffspeichers vorgesehen, so dass hier ein Wärmeübergang von dem Metallhydridwasserstoffspeicher in das kältere Meerwasser verhindert wird. Auf diese Weise werden Energieverluste und die IR-Signatur des Unterseebootes minimiert. Die Isolierung ermöglicht, die Wärmeenergie aus der Abwärme der Brennstoffzelle möglichst effizient zum Lösen des Wasserstoffs aus dem Metallhydridwasserstoffspeicher einzusetzen. Dies ist insbesondere deshalb von Vorteil, da mit steigender Energiezufuhr, d. h. steigende Temperatur in dem Metallhydridwasserstoffspeicher eine größere Menge von Wasserstoff gelöst wird. Eine verlängerte Abgabe von Wasserstoff aus dem Wasserstoffspeicher ermöglicht wiederum eine Erweiterung des Brennstoffzellenbetriebes. Somit kann die Leistungsabgabe der Brennstoffzellen verbessert werden.

Gemäß einer weiteren bevorzugten Ausführungsform ist der zumindest eine Metallhydridwasserstoffspeicher mit einer thermischen Isolierung in Form einer zweiten Hülle versehen. Die zweite Hülle, welche die thermische Isolierung bildet, umgibt den bzw. jeden einzelnen Metallhydridwasserstoffspeicher an dessen gesamten Umfang bzw. Oberfläche. Auf diese Weise wird eine bessere thermische Isolierung geschaffen, welche eine verbesserte Ausnutzung der dem Metallhydridwasserstoffspeicher zugeführten Wärme ermöglicht. Bevorzugt ist die zweite Hülle von einer ersten Hülle, welche den eigentlichen Mantel des Metallhydridwasserstoffspeichers bildet, nach außen beabstandet angeordnet, so dass zwischen der ersten und der zweiten Hülle ein Freiraum vorhanden ist. Durch diesen Freiraum kann ein Fluid, z.B. Kühlwasser geleitet werden, um die Wärmeenergie in den Metallhydridwasserstoffspeicher einzubringen. Die zweite Hülle verbessert dabei die Umströmung des Metallhydridwasserstoffspeichers mit dem Fluid, so dass die Wärmeübertragung verbessert wird und die Fluidmenge reduziert werden kann.

Weiter bevorzugt sind an der Außenseite des Druckkörpers mehrere nebeneinander liegende Metallhydridwasserstoffspeicher angeordnet, welche zumindest an der dem Druckkörper abgewandten Seite mit einer gemeinsamen thermischen Isolierung versehen sind. Dies ermöglicht eine kompakte Anordnung der Metallhydridwasserstoffspeicher mit einer minimalen zu isolierenden Außenfläche, so dass die Menge des erforderlichen Isoliermaterials minimiert werden kann. Die thermische Isolierung ist zumindest an der dem umgebenden Seewasser zugewandten Seite der Metallhydridwasserstoffspeicher angeordnet, so dass ein Wärmeübergang auf das Seewasser minimiert bzw. im Wesentlichen verhindert wird. Zwischen den einzelnen Metallhydridwasserstoffspeichern ist vorzugsweise keine Isolierung angeordnet, um einen Wärmeübergang zwischen den einzelnen Metallhydridwasserstoffspeichern zu ermöglichen. Dies gewährleistet eine gleichmäßige Erwärmung aller Metallhydridwasserstoffspeicher und somit eine optimierte gleichmäßige Abgabe von Wasserstoff aus allen Metallhydridwasserstoffspeichern des Unterseebootes.

Die Isolierung ist vorzugsweise aus glasfaserverstärktem Kunststoff, z. B. Laminat, und einem geschlossenzelligen Schaummaterial ausgebildet.

Ein solches Isoliermaterial ist leicht, weist die erforderliche Festigkeit und ausreichende Isolationseigenschaften auf.

Gemäß einer besonderen Ausführungsform der Erfindung kann zumindest ein Wärmezwischenspeicher hinter der zumindest einen Brennstoffzelle und dem zumindest einen Metallhydridwasserstoffspeicher vorgesehen sein, in welchem die von der Brennstoffzelle im Überschuss abgegebene Wärmeenergie zwischengespeichert wird. Dies ermöglicht, eine größere Menge von Wärmeenergie zwischenzuspeichern, um die Abgabe von Abwärme an das umgebende Seewasser für einen längeren Zeitraum unterbinden zu können, auch wenn der bzw. die Metallhydridwasserstoffspeicher keine weitere Wärmeenergie aufnehmen können. So kann in Gefahrensituationen für einen längeren Zeitraum die IR-Signatur des U-Bootes zusätzlich verringert werden, um eine Ortung des Unterseebootes zu erschweren. Darüber hinaus kann durch eine Zwischenspeicherung der als Abwärme abgegebenen Wärmeenergie der Brennstoffzelle und gegebenenfalls anderer Aggregate die Entnahme des Wasserstoffes aus den Metallhydridwasserstoffspeichern besser gesteuert werden. Die Zwischenspeicherung der Wärmeenergie ermöglicht die dem Metallhydridwasserstoffspeicher zugeführte Energie und damit das Lösen von Wasserstoff aus dem Metallhydrid zu steuern. Ein Wärmezwischenspeicher kann entweder als separates Bauteil bzw. in Form mehrerer separater Bauteile vorgesehen werden oder der zwischen Brennstoffzelle und Metallhydridwasserstoffspeicher vorgesehene Kühlkreislauf bzw. Wärmetauscher kann als Wärmezwischenspeicher dienen.

Bevorzugt wird die Wärmeenergie von der Brennstoffzelle zu dem Metallhydridwasserstoffspeicher über einen Fluidkreislauf übertragen. Besonders bevorzugt wird ein Wasserkreislauf verwendet. Es können jedoch auch andere geeignete Fluide in dem Kreislauf zwischen Brennstoffzelle und Metallhydridwasserstoffspeicher als Trägermedium zum Wärmetransport verwendet werden.

Bevorzugt wird das Fluid am Mantel des Metallhydridwasserstoffsspeichers vorbeigeführt. Dabei überströmt das Fluid einen möglichst großen Teil des Metallhydridwasserstoffsspeichers, um eine gleichmäßige Erwärmung des Metallhydridwasserstoffspeichers und einen möglichst schnellen Energieeintrag in den Metallhydridwasserstoffspeicher zum Lösen des Wasserstoffs zu ermöglichen.

Nachfolgend wird die Erfindung beispielhaft anhand der beigefügten Figuren beschrieben. In diesen zeigt:
- Fig. 1: eine schematische Gesamtansicht des erfindungsgemäßen Unterseebootes,
- Fig. 2: eine Schnittansicht der Anordnung von Metallhydridwasserstoff speichern,
- Fig. 3: eine Seitenansicht der Anordnung der Metallhydridwasserstoffspeicher,
- Fig.4: eine Schnittansicht eines Metallhydridwasserstoffspeichers gemäß einer weiteren Ausführungsform und
- Fig. 5: ein Diagramm, welches den Druck in dem Wasserstoffspeicher in Abhängigkeit von der Konzentration und der Temperatur darstellt.

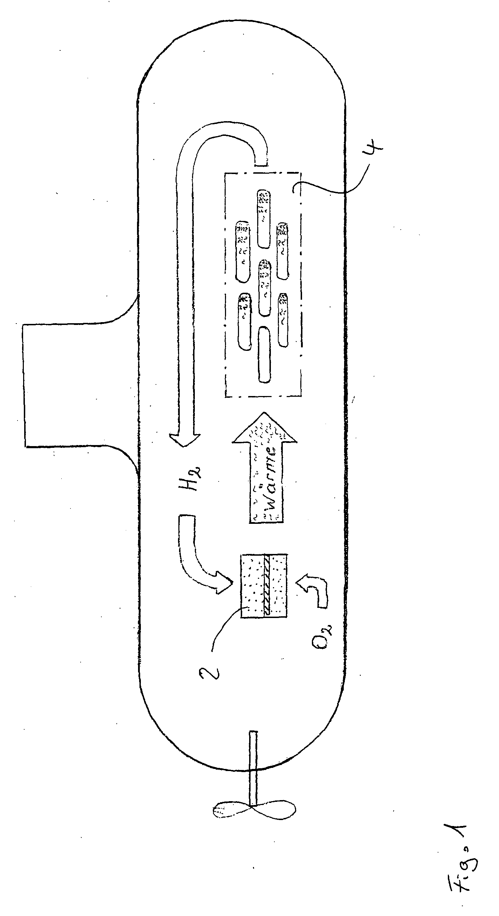

Figur 1 zeigt schematisch ein Unterseeboot mit dem erfindungsgemäßen Energieversorgungssystem. Das Energieversorgungssystem umfasst im Wesentlichen eine oder mehrere Brennstoffzellen 2 sowie eine Anordnung von Metallhydridwasserstoffspeichern 4. Der Wasserstoff aus den Metallhydridspeichern 4 wird der Brennstoffzelle 2 zugeführt, welche unter gleichzeitiger Zufuhr von Sauerstoff elektrische Energie zur Energieversorgung des Unterseeboots und dessen Antriebssystems abgibt. Neben elektrischer Energie gibt die Brennstoffzelle 2 Wärmeenergie in Form von Abwärme ab. Erfindungsgemäß wird die Abwärme bzw. Wärmeenergie, welche von der Brennstoffzelle 2 abgegeben wird, den Metallhydridwasserstoffspeichern 4 zugeführt, um in diesen ein Auslösen von Wasserstoff zu bewirken. Zum Lösen des Wasserstoffs aus den Metallhydridwasserstoffspeichern 4 ist eine Energiezufuhr erforderlich, um die Bindeenergie des Wasserstoffs in dem Metallhydrid zu überwinden. Diese Energiezufuhr erfolgt in Form von Wärmeenergie, welche als Abwärme von den Brennstoffzellen 2 zur Verfügung gestellt wird. Auf diese Weise können zusätzliche Aggregate zum Bereitstellen von Wärme für die Metallhydridwasserstoffspeicher 4 eingespart werden. Gemäß beschriebenen Verfahren ist keine zusätzliche Energie zum Lösen des Wasserstoffs aus den Metallhydridwasserstoffspeichern 4 erforderlich. Dadurch verbessert sich der Wirkungsgrad des Energieversorgungssystem und damit des gesamten Antriebs des Unterseebootes. Darüber hinaus können zusätzliche Aggregate, welche unerwünschte Geräuschquellen darstellen, eingespart werden.

Gleichzeitig wird die von der Brennstoffzelle bzw. den Brennstoffzellen 2 abgegebene Abwärme einer Nutzung bzw. Speicherung innerhalb des Unterseebootes zugeführt, so dass es nicht erforderlich ist, die Abwärme an das Seewasser abzugeben. Dadurch kann die IR-Signatur des Unterseebootes verringert werden, so dass die Ortung des Unterseeboots aufgrund seiner Wärmeabgabe erschwert wird. Die Metallhydridwasserstoffspeicher 4 fungieren somit gleichzeitig als Wärmespeicher bzw. Wärmezwischenspeicher, wobei die hohe Wärmekapazität des Metallhydrids ausgenutzt wird. Die Abwärme der Brennstoffzellen wird dabei in den Metallhydrid-Wasserstoffspeichern zwischengespeichert, um zumindest vorübergehend, beispielsweise in Gefahrensituationen, die IR-Signatur des Unterseebootes deutlich zu verringern. Neben den vollen Metallhydridwasserstoffspeichern 4, in welchen die Wärmeenergie zum Lösen des Wasserstoffs dient, kann die Abwärme auch teilentladenen Metallhydridwasserstoffspeichern, aus denen der Wasserstoff bereits entnommen wurde, zugeführt und dort zwischengespeichert werden.

Figur 2 zeigt in einer schematischen Querschnittansicht die Anordnung der Metallhydridwasserspeicher 4. Mehrere Metallhydridwasserspeicher 4 sind parallel zueinander und parallel zur Längsachse des Unterseeboots unterhalb des Druckkörpers 6 angeordnet. Nach außen zum Seewasser hin sind die Metallhydridwasserstoffspeicher 4 durch einen Isoliermantel 8 abgedeckt. Der Isoliermantel 8 besteht beispielsweise aus glasfaserverstärktem Kunststoff in Form eines Laminats und einem druckfesten Schaumstoff. Als druckfester Schaumstoff eignet sich ein geschlossenzelliger Isolierschaum, in welchen kein Wasser eindringen kann. Der Isoliermantel 8 ist seitlich mit dem Druckkörper 6 verbunden, so dass ein geschlossener Speicherraum 10 geschaffen wird, in dem die Metallhydridwasserstoffspeicher 4 angeordnet sind. Die geschickte Anordnung der Metallhydridspeicher 4 zueinander in dem gemeinsamen Speicherraum 10 und die gute Isolierung des Speicherraums 10 durch den Isoliermantel 8 nach außen hin, ermöglicht, den Wärmeeintrag in die Metallhydridwasserstoffspeicher derart zu regeln, dass die von den Brennstoffzellen 2 abgegebene Abwärme ausreicht, die Metallhydridwasserstoffspeicher 4 zu beheizen, um den Wasserstoff aus diesen zu lösen. Es entsteht somit ein geschlossener Kreislauf, in dem die von den Brennstoffzellen 2 abgegebene Abwärme wieder den Metallhydridwasserstoffspeichern 4 zugeführt wird, um aus diesen weiteren Wasserstoff zum Betreiben der Brennstoffzelle zu lösen. Der Wärmetransport von den Brennstoffzellen 2 zu den Metallhydridwasserstoffspeichern 4 erfolgt dabei über ein geeignetes Trägermedium, insbesondere einen Fluidkreislauf, beispielsweise einen Wasserkreislauf. In diesem Kreislauf können zusätzliche Wärmezwischenspeicher vorgesehen sein, wobei jedoch der Fluidkreislauf selber bereits als Wärmezwischenspeicher fungiert. Solche Wärmezwischenspeicher sind im Fluidkreislauf bevorzugt dem Metallhydridwasserstoffspeicher 4 nachgeschaltet, so dass die von der Brennstoffzelle 2 abgegebene Wärmeenergie zunächst dem Metallhydridwasserstoffspeicher 4 zugeführt wird und nur überschüssige Wärmeenergie, welche von dem Metallhydridwasserstoffspeicher 4 nicht aufgenommen werden kann oder soll, dem Wärmezwischenspeicher zugeführt wird. Die zum Anfahren des Systems notwendige Wärmeenergie kann aus dem Seewasser entnommen werden, bis die Brennstoffzelle 2 eine ausreichende Wärmeenergie als Abwärme bereitstellt.

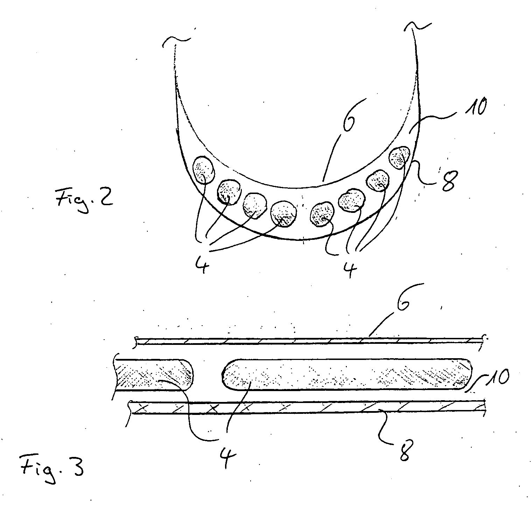

Figur 3 zeigt einen schematischen Längsschnitt der Anordnung gemäß Figur 2. Wie in Figur 3 zu erkennen ist, werden unterhalb des Druckkörpers 6 zweckmäßigerweise nicht nur mehrere Metallhydridwasserstoffspeicher 4 nebeneinander liegend, sondern auch in Längsrichtung des Unterseebootes hintereinander liegend angeordnet. Die gute Isolierung des Speicherraums 10 nach außen hin verhindert ferner einen Wärmeübergang von den Metallhydridwasserstoffspeichern4 auf das umgebende Seewasser, wodurch Wärmeverluste und die IR-Signatur des Unterseebootes verringert werden. Um die IR-Signatur in Gefahrensituation weiter verringern zu können, werden wie beschrieben leere Metallhydridwasserstoffspeicher als Wärmezwischenspeicher verwendet, wobei überschüssige Wärmeenergie aus den Brennstoffzellen und/oder weiteren wärmeabgegebenden Aggregaten im Inneren des Unterseebootes, welche nicht direkt zum Auslösen von Wasserstoff aus noch gefüllten Metallhydridwasserstoffspeichern benötigt wird, in teilentladenen Metallhydridwasserstoffspeichern 4 zwischengespeichert wird.

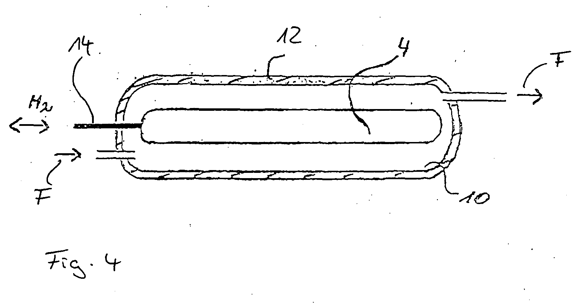

Fig. 4 zeigt in einer Schnittansicht eine weitere Ausführungsform eines Metallhydridwasserstoffspeichers 4. Gemäß der Ausführungsform in Fig. 4 ist der Metallhydridwasserstoffspeicher 4 vollständig von einer zweiten Hülle 12 umgeben, welche als Isoliermantel 8 dient. Somit ist gemäß der Ausführungsform in Fig. 4 der Metallhydridwasserstoffspeicher 4 von allen Seiten thermisch durch die zweite Hülle 12 isoliert. Die zweite Hülle 12 ist dabei entsprechend im Isoliermantel 8 ausgebildet, d. h. zum Beispiel in Form eines Laminats aus glasfaserverstärkten Kunststoff und einem druckfesten Schaumstoff. Die zweite Hülle 12 ist beabstandet zu dem eigentlichen Mantel des Metallhydridswasserstoffspeichers 4 angeordnet, so dass zwischen Metallhydridwasserstoffspeicher 4 und Innenwandung der Hülle 12 ein Freiraum in Form des Speicherraums 10 geschaffen wird. Durch diesen Speicherraum 10 wird wie durch die Pfeile F in Fig. 4 angedeutet, ein Fluid zur Wärmeübertragung, beispielsweise eine Kühlwasserströmung geleitet. Die zweite Hülle 12 bewirkt neben einer verbesserten thermischen Isolierung einen verbesserten Strömungsverlaufs des Fluids, so dass die Fluid- bzw. Kühlwassermenge reduziert werden kann und der Wärmeübergang von dem Fluid auf und den Metallhydridwasserstoffspeicher 4 verbessert wird. Der Wasserstoff wird durch die Leitung 14 dem Metallhydridwasserstoffspeicher 4 zugeführt bzw. aus diesem entnommen.

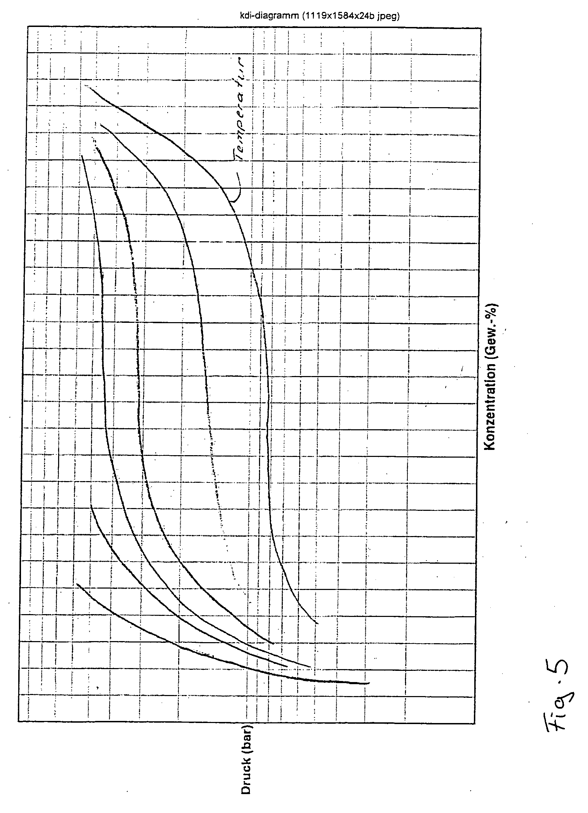

Figur 5 zeigt in einem KDI-Diagramm den Verlauf des Druckes in einem Metallhydridwasserstoffspeicher 4 in Abhängigkeit von der Wasserstoffkonzentration (in Gewichtsprozent) im Inneren des Metallhydridwasserstoffspeichers 4 und der Temperatur. Das Diagramm zeigt mehrere Kurven des Druckverlaufs über der Konzentration, wobei die weiter oben liegenden Kurven in dem Diagramm den Druckverlauf bei höherer Temperatur zeigen. Zu erkennen ist, dass mit höherer Temperatur der Druck in dem Metallhydridwasserstoffspeicher 4 zunimmt. Dies bedeutet, dass bei höherer Temperatur mehr Wasserstoff aus dem Metallhydridwasserstoffspeicher 4 gelöst werden kann. Eine höhere Wärmezufuhr in den Metallhydridwasserstoffspeicher 4 ermöglicht somit eine schnellere Entnahme einer größeren Wasserstoffmenge. Auf diese Weise lässt sich durch höhere Wärmezufuhr in den Wasserstoffspeicher die Verfügbarkeit von Wasserstoff und somit die Leistung des gesamten Energieversorgungssystems steigern.

### Bezugszeichenliste

- 2: Brennstoffzelle
- 4: Metallhydridwasserstoffspeicher
- 6: Druckkörper
- 8: Isoliermantel
- 10: Speicherraum

- 12: zweite Hülle
- 14: Leitung
- F: Fluidströmung

## Patentansprüche

1. Unterseeboot mit zumindest einer Brennstoffzelle (2) und zumindest einem Metallhydridwasserstoffspeicher (4), bei welchem von der Brennstoffzelle (2) als Abwärme abgegebene Wärmeenergie zum Lösen von Wasserstoff aus dem Metallhydridwasserstoffspeicher (4) verwendet wird.

2. Unterseeboot nach Anspruch 1, bei welchem die gesamte erforderliche Energie zum Lösen des Wasserstoffs aus dem Metallhydridwasserstoffspeicher (4) durch die Wärmeenergie aus der Abwärme der Brennstoffzelle (2) bereitgestellt wird.

3. Unterseeboot nach Anspruch 1 oder. 2, bei welchem der Metallhydridwasserstoffspeicher (4) als Wärmespeicher dient.

4. Unterseeboot nach einem der vorangehenden Ansprüche, bei welchem die gesamte Wärmeenergie aus der Abwärme der Brennstoffzelle (2) in den Metallhydridwasserstoffspeicher (4) eingebracht wird.

5. Unterseeboot nach einem der vorangehenden Ansprüche, bei welchem der zumindest eine Metallhydridwasserstoffspeicher (4) an einer Außenseite des Druckkörpers (6) des Unterseebootes angeordnet ist und zumindest an seiner dem Druckkörper (6) abgewandten Seite nach außen hin mit einer thermischen Isolierung (8) versehen ist.

6. Unterseeboot nach einem der vorangehenden Ansprüche, bei welchem der zumindest eine Metallhydridwasserstoffspeicher (4) mit einer thermischen Isolierung in Form einer zweiten Hülle (12) versehen ist.

7. Unterseeboot nach Anspruch 5 oder 6, bei welchem an der Außenseite des Druckkörpers (6) mehrere nebeneinander liegende Metallhydridwasserstoffspeicher (4) angeordnet sind, welche zumindest an der dem Druckkörper (6) abgewandten Seite mit einer gemeinsamen thermischen Isolierung (8) versehen sind.

8. Unterseeboot nach einem der Ansprüche 5 bis 7, bei welchem die Isolierung (8; 9) aus glasfaserverstärktem Kunststoff und einem geschlossenzelligen Schaummaterial besteht.

9. Unterseeboot nach einem der vorangehenden Ansprüche, bei welchem zumindest ein Wärmezwischenspeicher hinter der Brennstoffzelle (2) und dem Metallhydridwasserstoffspeicher (4) vorgesehen ist, in welchem die von der Brennstoffzelle (2) abgegebene Wärmeenergie zwischengespeichert wird.

10. Unterseeboot nach einem der vorangehenden Ansprüche, bei welchem die Wärmeenergie von der Brennstoffzelle (2) zu dem Metallhydridwasserstoffspeicher (4) über einen Fluidkreislauf übertragen wird.

11. Unterseeboot nach Anspruch 9, bei welchem das Fluid am Mantel des Metallhydridwasserstoffspeichers (4) vorbeigeführt wird.
